# EUROPÄISCHE PATENTSCHRIFT

(11) **EP 2 484 563 B1**
(45) Veröffentlichungstag und Bekanntmachung des Hinweises auf die Patenterteilung: **27.11.2013**
(21) Anmeldenummer: 11192136.7
(22) Anmeldetag: 06.12.2011
(51) Int. Cl.: B60R 21/38

(54) **Fronthaubenscharnier zur gelenkigen Anordnung einer Fronthaube an einem Fahrzeug**
Bonnet hinge for a jointed connection of a vehicle bonnet to a vehicle
Charnière de capot frontal destinée à l'agencement articulé d'un capot frontal sur un véhicule

(43) Veröffentlichungstag der Anmeldung: 08.08.2012
(73) Patentinhaber: Metalsa Automotive GmbH, 51702 Bergneustadt (DE)
(72) Erfinder: Hofacker, Dennis, 57462 Olpe (DE); Olfert, Johann, 51702 Bergneustadt (DE)
(74) Vertreter: Kalkoff & Partner

(56) Entgegenhaltungen:
- EP-A1- 1 880 907
- DE-A1-102004 062 105
- US-A1- 2009 050 388

## Beschreibung

Die Erfindung betrifft ein Fronthaubenscharnier zur gelenkigen Anordnung einer Fronthaube an einem Fahrzeug, mit
- einem mit einem Karosseriebauteil verbindbaren Scharnierunterteil,
- einem mit der Fronthaube verbindbaren Scharnieroberteil mit
- einem gelenkig mit dem Scharnierunterteil verbundenen Klappenteil und
- einem an der Fronthaube anordbaren, gelenkig mit dem Klappenteil verbundenen und gegenüber diesem zwischen einer Normallage und einer Crashlage verstellbaren Oberteil und
- einer Verriegelungsvorrichtung mit einer zwischen einer Entriegelungsstellung und einer Verriegelungsstellung verschwenkbaren, gelenkig an dem einen von Klappenteil und Oberteil angeordneten und in der Verriegelungsstellung mit einem Halteelement an dem anderen von Klappenteil und Oberteil in Eingriff befindlichen Sperrklinke.

Fronthaubenscharniere der eingangs genannten Art sind bereits in vielfältigen Ausgestaltungen aus dem Stand der Technik bekannt. Sie dienen zur schwenkbaren Aufnahme der Fronthaube, bspw. einer Motorhaube eines Kraftfahrzeuges und können zwischen einer Schließposition, in der die Haube in der Regel durch ein Haubenschloss gesichert, einen Motorraum überdeckt und einer Öffnungsposition, welche den Zugang zu einem unter der Fronthaube angeordneten Motorraum ermöglicht, verstellt werden.

Aus dem Dokument DE 10 2004 062 105 A1 ist ein Fronthaubenscharnier nach dem Oberbegriff des Anspruchs 1 bekannt.

Zur Verringerung der Schwere von Personenschäden bei Unfällen, bei denen die Personen mit der Fronthaube eines Kraftfahrzeuges in Kontakt gelangen, werden zunehmend höhere Anforderungen an die Fahrzeughersteller gestellt, um den Fußgängerschutz zu erhöhen. Wesentlich ist dabei, dass gewährleistet werden muss, dass vorgeschriebene HIC-Werte (Kopfaufprall auf der Fronthaube) erreicht werden. Dabei werden zur Erlangung der vorgeschriebenen HIC-Werte bspw. für den Fall, dass zwischen der Fronthaubenunterseite und den darunter angeordneten Fahrzeugkomponenten, bspw. einem Motorblock, nicht genügend Raum zur Energieabsorbierung beim Aufprall durch Deformation der Fronthaube zur Verfügung steht, vermehrt Fronthaubenscharniere der eingangs genannten Art verwendet, bei denen das mit der Fronthaube verbindbare Scharnieroberteil zweiteilig ausgebildet ist, so dass auch ohne Verstellung des Scharnieroberteils gegenüber dem Scharnierunterteil eine Verlagerung der Fronthaube in eine Crashlage erfolgen kann, nämlich durch eine Verstellung des mit der Fronthaube verbindbaren Oberteils gegenüber dem gelenkig mit dem Scharnierunterteil verbundenen Klappenteil.

Bekannte Fronthaubenscharniere, die eine Aufstellung einer solchen erlauben, weisen in der Regel jedoch einen sehr komplexen Aufbau auf, um u. a. auch in einer Normallage, d. h. in der Stellung, in der ein Klappenteil gegenüber einem Oberteil verriegelt ist, eine zuverlässige Lagearretierung einer mit dem Scharnier verbundenen Fronthaube zu gewährleisten.

Der Erfindung liegt die Aufgabe zugrunde, ein Fronthaubenscharnier der eingangs genannten Art bereitzustellen, welches sich kostengünstig herstellen lässt und eine einfache Verlagerungsmöglichkeit eines Oberteils gegenüber einem Klappenteil ermöglicht.

Die Erfindung löst die Aufgabe durch ein Fronthaubenscharnier mit den Merkmalen des Anspruchs 1. Vorteilhafte Weiterbildungen der Erfindung sind in den abhängigen Ansprüchen angegeben.

Wesentlich für das erfindungsgemäße Fronthaubenscharnier - das insbesondere als kostengünstiges Eingelenkscharnier ausgebildet sein kann - ist, dass die Sperrklinke zur Lagesicherung des Oberteils an dem Klappenteil in einer Normallage um eine im Wesentlichen senkrecht zur Schwenkachse des Oberteils mit dem Klappenteil verlaufenden Lagerachse verschwenkbar mit dem einen von Klappenteil und Oberteil verbunden ist. Diese Ausgestaltung der Erfindung gewährleistet zum einen eine sichere und vor allem weitestgehend spielfreie Lagesicherung des mit der Haube verbindbaren Oberteils an dem Klappenteil. In der Einbaulage des erfindungsgemäßen Fronthaubenscharniers kann somit zuverlässig gewährleistet werden, dass die Fronthaube im Normalbetrieb zuverlässig gegenüber angrenzenden Karosseriebauteilen in ihrer Lage gesichert ist.

Um eine Verstellung der Fronthaube in eine gegenüber der Normallage aufgestellte Crashlage zu ermöglichen, ist die Sperrklinke aus einer Verriegelungsstellung in eine Entriegelungsstellung verlagerbar, in der das gelenkig mit dem Klappenunterteil verbundene Oberteil gegenüber diesem verschwenkbar ist.

Die Verwendung einer Sperrklinke ermöglicht, insbesondere in Verbindung mit einem besonders einfach aufgebauten Eingelenkscharnier, eine einfache und kostengünstige Herstellung eines Fronthaubenscharniers mit einer im Crashfall bestehenden Verlagerungsmöglichkeit des Oberteils gegenüber dem Klappenunterteil. Das erfindungsgemäße Fronthaubenscharnier weist somit einen besonders einfachen Aufbau auf und lässt durch die Verwendung der Sperrklinke überdies eine besonders einfache Bedienung zu.

Grundsätzlich kann zur Arretierung des Oberteils an dem Klappenteil die Sperrklinke gelenkig mit dem Klappenteil oder dem Oberteil verbunden sein und mit einem Halteelement an dem anderen Teil in der Verriegelungsstellung zusammenwirken. Nach einer besonders vorteilhaften Ausgestaltung der Erfindung ist jedoch vorgesehen, dass die Sperrklinke schwenkbar an dem Klappenteil, insbesondere einer Haltelasche des Klappenteils angeordnet ist. Gemäß dieser Ausgestaltung der Erfindung erfolgt die gelenkige Anordnung der Sperrklinke an dem Klappenteil, bevorzugt einer Haltelasche und wirkt folglich in der Verriegelungsstellung mit einem am Oberteil angeordneten Halteelement zusammen. Die Anordnung der Sperrklinke an dem Klappenteil lässt sich besonders einfach realisieren und erlaubt überdies eine gute Zugänglichkeit zum Fronthaubenscharnier durch eine - bezogen auf die Einbaulage - unterhalb des Fronthaubenscharniers angeordnete Betätigungsvorrichtung, so dass auf umfangreiche und unter Umständen kostenintensive Umlenkvorrichtungen zur Betätigung der Sperrklinke verzichtet werden kann. Die gute Zugänglichkeit erlaubt somit eine einfache und vor allem schnelle Verlagerung der Sperrklinke aus der Verriegelungsstellung in die Entriegelungsstellung.

Nach einer weiteren vorteilhaften Ausgestaltung der Erfindung ist die Sperrklinke in Richtung auf die Verriegelungsstellung vorgespannt. Diese Ausgestaltung der Erfindung gewährleistet eine besonders zuverlässige Lagesicherung der Sperrklinke in der Verriegelungsstellung, so dass es auch durch sämtliche im Betrieb auftretenden, auf das Fronthaubenscharnier wirkenden Belastungen nicht zu einer fehlerhaften Verlagerung der Sperrklinke in die Verriegelungsstellung kommt. Darüber hinaus ermöglicht diese Ausgestaltung der Erfindung eine einfache Reversierbarkeit eines gegenüber dem Klappenteil verlagerten Oberteils, wobei das mit der Fronthaube verbundene Oberteil lediglich manuell in die Normallage zurückgedrückt werden muss, in der dann die Sperrklinke aufgrund ihrer Federvorspannung wieder mit dem Halteelement zusammenwirkt. Besonders vorteilhafterweise ist dabei die Sperrklinke derart ausgebildet, dass diese - bspw. durch eine angeschrägteAußenfläche - im Zusammenwirken mit dem Halteelement bei einer Rückbewegung aus der Crashlage in die Normallage eine zuverlässige Verstellung der Sperrklinke bewirkt, so dass das Halteelement dann wieder durch die Sperrklinke arretiert wird.

Die Ausbildung der Sperrklinke sowie dessen gelenkige Anordnung ist grundsätzlich frei wählbar. Ebenso ist die Ausgestaltung der Sperrklinke zu dessen Verlagerung aus der Verriegelungsstellung in die Entriegelungsstellung grundsätzlich beliebig ausgestaltbar. Nach einer besonders vorteilhaften Ausgestaltung der Erfindung ist jedoch vorgesehen, dass die Sperrklinke einerseits ihrer vorzugsweise durch einen Lagerbolzen gebildeten Schwenkachse einen ersten Schenkel mit einer in der Verriegelungsstellung mit einem Halteelement, vorzugsweise einen sich im Wesentlichen parallel zur Schwenkachse der Sperrklinke erstreckenden Haltebolzen, in Eingriff befindliche Ausnehmung und andererseits ihrer Schwenkachse einen zweiten Schenkel mit einem mit einem Aktuator in Wirkverbindung bringbaren Betätigungskörper aufweist.

Gemäß dieser Ausgestaltung der Erfindung weist die Verriegelungsklinke einen Drehpunkt auf, welcher vorzugsweise durch einen Lagerbolzen gebildet ist. Der erste Schenkel der Sperrklinke weist dabei eine Ausnehmung auf, welche an das Halteelement angepasst ist, so dass die Sperrklinke das Oberteil in der Verriegelungsstellung zuverlässig arretiert. Der dem ersten Schenkel gegenüberliegende zweite Schenkel der Sperrklinke weist ferner einen Betätigungskörper auf, wobei eine Verlagerung des Betätigungskörpers durch einen Aktuator eine Verschwenkbewegung der Sperrklinke um deren Lagerachse bewirkt, wobei die Sperrklinke dann aus der Verriegelungsstellung in die Entriegelungsstellung verstellt wird, in der das Halteelement mit der Ausnehmung außer Eingriff gelangt.

Eine derartige Ausgestaltung der Sperrklinke erlaubt eine besonders zuverlässige und einfache Verstellung der Sperrklinke zwischen der Entriegelungsstellung und der Verriegelungsstellung. In Abhängigkeit von den Abständen des Betätigungskörpers von der Lagerachse bzw. der Ausnehmung von der Lagerachse kann dabei eine Übersetzung der Bewegung des Betätigungskörpers stattfinden.

Wie an obiger Stelle dargelegt, ist nach einer vorteilhaften Weiterbildung der Erfindung vorgesehen, dass die Sperrklinke in Richtung auf die Verriegelungsstellung vorgespannt ist. Die Ausgestaltung der Vorspannung kann dabei grundsätzlich in beliebiger Weise erfolgen. Nach einer besonders vorteilhaften Weiterbildung der Erfindung ist jedoch vorgesehen, dass die Sperrklinke durch ein an dem zweiten Schenkel angreifendes Federelement, insbesondere eine Blattfeder in Richtung auf die Verriegelungsstellung vorgespannt ist. Eine derartige Ausgestaltung der Vorspannung, insbesondere die Verwendung einer Blattfeder lässt sich besonders einfach und vor allem kostengünstig realisieren. Vorteilhafterweise ist dabei die Blattfeder an dem Klappenteil befestigt und greift mit ihrem freien Ende an eine Anlagefläche der Sperrklinke an, so dass diese in Richtung auf die Verriegelungsstellung vorgespannt ist. Zur Verstellung der Sperrklinke ist es ggf. erforderlich, diese entgegen der Federkraft um die Lagerachse zu verschwenken, wobei hierzu eine Betätigungsvorrichtung vorzusehen wäre, die an der Sperrklinke angreift.

Um im Falle einer Verstellung die entsprechende Bewegung der Sperrklinke aus der Verriegelungsstellung in Richtung der Entriegelungsstellung zu beschränken, ist nach einer weiteren vorteilhaften Ausgestaltung der Erfindung vorgesehen, dass an dem Klappenteil ein mit dem Betätigungskörper in Eingriff bringbares, die Verstellbewegung der Sperrklinke aus der Verriegelungsstellung in die Entriegelungsstellung beschränkendes Anschlagelement ausgebildet ist. Durch diese Ausgestaltung der Erfindung kann sichergestellt werden, dass die Sperrklinke im Falle einer Entriegelung nur in einem vorgegebenen Bereich verschwenkt wird und dabei nicht in Bereiche gelangt, in der diese in Konflikt mit anderen Fahrzeugbauteilen gelangt.

Besonders vorteilhafterweise ist dabei vorgesehen, dass der Betätigungskörper durch einen abgewinkelten Abschnitt der Sperrklinke und/oder das Anschlagelement durch einen abgewinkelten Abschnitt des Klappenteils gebildet ist, so dass auf zusätzliche Bauteile, welche an Klappen- und/oder Oberteil zu befestigen wären, verzichtet werden kann.

Zur Verlagerung der Sperrklinke können grundsätzlich beliebige Betätigungsvorrichtungen verwendet werden, die im Falle einer Aktivierung derart mit dem Betätigungskörper zusammenwirken, dass sie dessen Verstellung bewirken. Nach einer besonders vorteilhaften Ausgestaltung der Erfindung ist jedoch vorgesehen, dass der Betätigungskörper derart ausgebildet ist, dass er mit einem Kolbenelement eines pyrotechnischen Aktuators in Eingriff bringbar ist. Eine derartige Ausgestaltung des Betätigungskörpers erlaubt im Zusammenwirken mit einem pyrotechnischen Aktuator eine besonders zuverlässige und vor allem schnelle Verlagerung der Sperrklinke aus der Verriegelungs- in die Entriegelungsstellung, so dass das Oberteil dann mit der mit dem Oberteil verbundenen Fronthaube unverzüglich in eine aufgestellte Position verstellt werden kann.

Ein Ausführungsbeispiel der Erfindung wird nachstehend mit Bezug auf die Zeichnungen näher erläutert. In den Zeichnungen zeigen:
- Fig. 1: eine Vorderansicht einer Ausführungsform eines Fronthaubenscharniers in einer Verriegelungsstellung;
- Fig. 2: eine Vorderansicht auf das Fronthaubenscharnier von Fig. 1 in einer Entriegelungsstellung und
- Fig. 3: eine perspektivische Ansicht des Fronthaubenscharniers von Fig. 1 in einer Verriegelungsstellung.

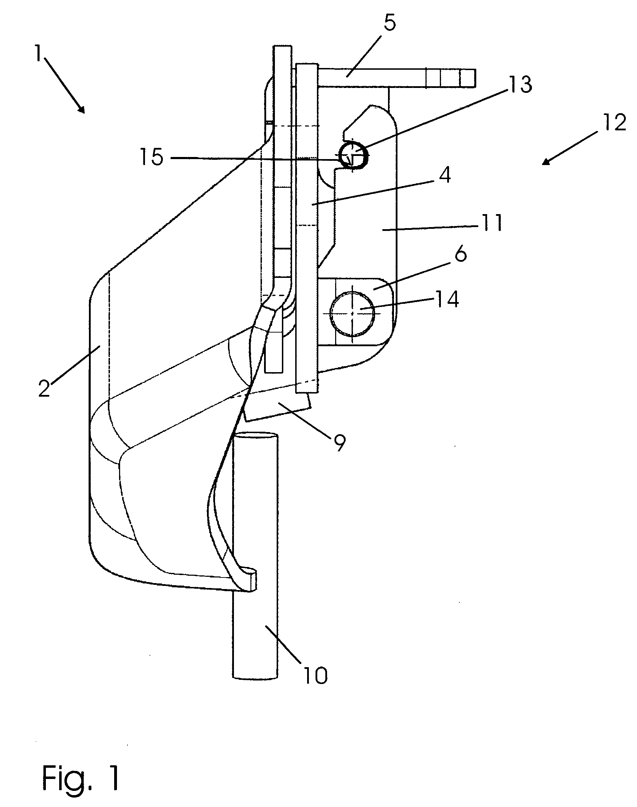

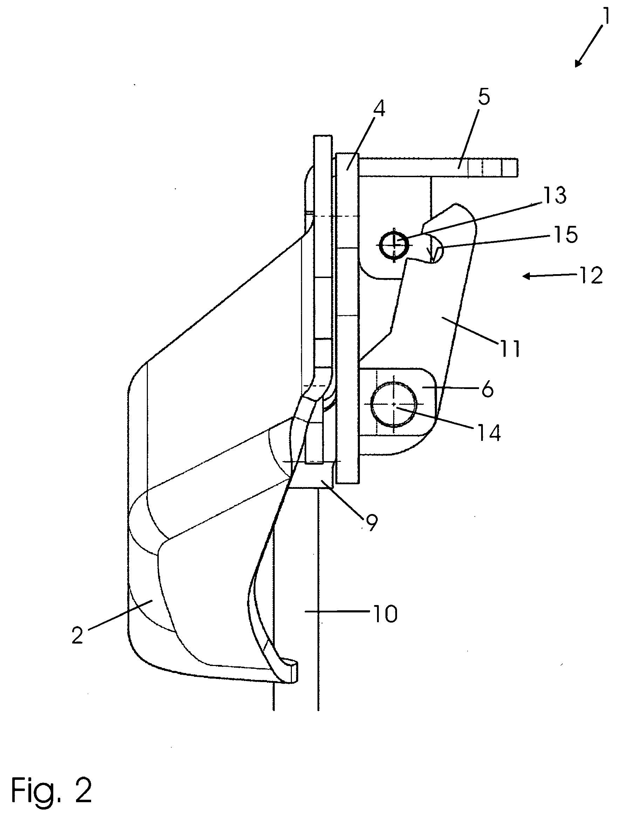

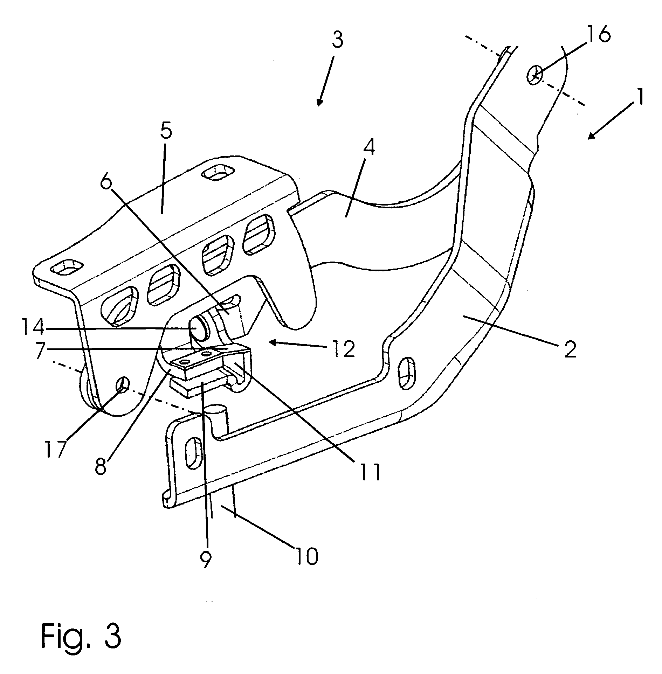

Ein Ausführungsbeispiel eines Fronthaubenscharniers ist in den Fig. 1 - 3 dargestellt, wobei das Fronthaubenscharnier 1 in den Fig. 1 und 3 in einer Verriegelungsstellung einer Sperrklinke 11 und in Fig. 2 in einer Entriegelungsstellung der Sperrklinke 11 abgebildet ist.

Zur Anordnung an einer Fahrzeugkarosserie weist das Fronthaubenscharnier 1 ein Scharnierunterteil 2 auf. Dieses ist zur gelenkigen Anbindung einer Fahrzeughaube über eine Lagerachse 16 gelenkig mit einem Scharnieroberteil 3 verbunden, so dass dieses gemeinsam mit dem Scharnieroberteil 3 ein Eingelenkscharnier bildet.

Um unabhängig von der Lage des Scharnieroberteils 3 zum Scharnierunterteil 2 im Crashfall, d. h. im Falle der Gefahr eines Personenaufpralls auf die Fronthaube eine Verlagerung der Fronthaube zu ermöglichen, weist das Scharnieroberteil 3 ein Klappenteil 4 sowie ein mit einer Fronthaube verbindbares Oberteil 5 auf. Das Klappenteil 4 ist sowohl mit dem Scharnierunterteil 2 als auch mit dem Oberteil 5 über eine Lagerachse 12 gelenkig verbunden. Über die Lagerachse 17 besteht somit die Möglichkeit, das Oberteil 5 gegenüber dem Klappenteil 4 zu verschwenken.

Im Normalbetrieb des Fronthaubenscharniers ist das Oberteil 5 durch eine Sperrklinke 11 an dem Klappenteil 4 arretiert. Die Sperrklinke 11 ist dabei schwenkbar an einem Lagerbolzen 14 angeordnet, welcher an einer Haltelasche 6 des Klappenteils 4 befestigt ist und umgreift mit einer Ausnehmung 15 der Sperrklinke 11 teilweise ein am Oberteil 5 angeordneten, ein Halteelement bildenden Bolzen 13, so dass das Oberteil 5 gegenüber dem Klappenteil 4 lagegesichert ist.

Um eine Verstellung des Oberteils 5 gegenüber dem Klappenteil 4 zu ermöglichen, ist es erforderlich, die Sperrklinke 11 um den Lagerbolzen 14 zu verschwenken, bis der Bolzen 13 mit der Ausnehmung 15 außer Eingriff gelangt. Hierzu weist die Sperrklinke 11 an ihrem zweiten freien Schenkel einen gegenüber der durch den ersten freien Schenkel gebildeten Ebene abgewinkelten Betätigungskörper 9 auf, wobei eine Verlagerung des Betätigungskörpers 9, bspw. durch ein Kolbenelement 10 eines hier nicht dargestellten pyrotechnischen Aktuators eine Verdrehung der Sperrklinke 11 bewirkt. Die Verschwenkbewegung der Sperrklinke 11 ist dabei durch ein Anschlagelement 8 begrenzt, welches von dem Klappenteil 4 abgewinkelt ist und im Bewegungsbereich des Betätigungskörpers 9 angeordnet ist.

Um eine zuverlässige Lagesicherung der Sperrklinke 11 in der Verriegelungsstellung zu gewährleisten, ist an dem Klappenteil 4 im Bereich des Anschlagelements 8 eine Blattfeder 7 befestigt, welche mit ihrem freien Schenkel an einer Anlagefläche der Sperrklinke 11 anliegt und durch die Federvorspannung diese in Richtung auf die Verriegelungsstellung vorspannt.

## Patentansprüche

1. Fronthaubenscharnier (1) zur gelenkigen Anordnung einer Fronthaube an einem Fahrzeug, mit
- einem mit einem Karosseriebauteil verbindbaren Scharnierunterteil (2),
- einem mit der Fronthaube verbindbaren Scharnieroberteil (3) mit
- einem gelenkig mit dem Scharnierunterteil (2) verbundenen Klappenteil (4) und
- einem an der Fronthaube anordbaren, gelenkig mit dem Klappenteil (4) verbundenen und gegenüber diesem zwischen einer Normallage und einer Crashlage verstellbaren Oberteil (5) und
- einer Verriegelungsvorrichtung mit einer zwischen einer Entriegelungsstellung und einer Verriegelungsstellung verschwenkbaren, gelenkig an dem einen von Klappenteil (4) und Oberteil (5) angeordneten und in der Verriegelungsstellung mit einem Halteelement (13) an dem anderen von Klappenteil (4) und Oberteil (5) in Eingriff befindlichen Sperrklinke (11),
**dadurch gekennzeichnet, dass**
die Sperrklinke (11) um eine im Wesentlichen senkrecht zur Schwenkachse des Oberteils (5) mit dem Klappenteil (4) verlaufende Lagerachse (17) verschwenkbar mit dem einen von Klappenteil (4) und Oberteil (5) verbunden ist.

2. Fronthaubenscharnier nach Anspruch 1, **dadurch gekennzeichnet, dass** die Sperrklinke (11) schwenkbar an dem Klappenteil (4), insbesondere einer Haltelasche (6) des Klappenteils (4) angeordnet ist.

3. Fronthaubenscharnier nach Anspruch 1 oder 2, **dadurch gekennzeichnet, dass** die Sperrklinke (11) in Richtung auf die Verriegelungsstellung vorgespannt ist.

4. Fronthaubenscharnier nach einem der vorhergehenden Ansprüche, **dadurch gekennzeichnet, dass** die Sperrklinke (11) einerseits ihrer vorzugsweise durch einen Lagerbolzen (14) gebildeten Schwenkachse einen ersten Schenkel mit einer in der Verriegelungsstellung mit einem Halteelement (13), vorzugsweise einem sich im Wesentlichen parallel zur Schwenkachse der Sperrklinke (11) erstreckenden Haltebolzen in Eingriff befindliche Ausnehmung (15) und andererseits ihrer Schwenkachse einen zweiten Schenkel mit einem mit einem Aktuator in Wirkverbindung bringbaren Betätigungskörper (9) aufweist.

5. Fronthaubenscharnier nach einem der vorhergehenden Ansprüche, **dadurch gekennzeichnet, dass** die Sperrklinke (11) durch ein an dem zweiten Schenkel angreifendes Federelement, insbesondere eine Blattfeder (7) in Richtung auf die Verriegelungsstellung vorgespannt ist.

6. Fronthaubenscharnier nach einem der vorhergehenden Ansprüche, **dadurch gekennzeichnet, dass** an dem Klappenteil (4) ein mit dem Betätigungskörper (9) in Eingriffbringbares, die Verstellbewegung der Sperrklinke (11) aus der Verriegelungsstellung in die Entriegelungsstellung beschränkendes Anschlagelement (8) ausgebildet ist.

7. Fronthaubenscharnier nach einem der vorhergehenden Ansprüche, **dadurch gekennzeichnet, dass** der Betätigungskörper (9) durch einen abgewinkelten Abschnitt der Sperrklinke (11) und/oder das Anschlagelement (8) durch einen abgewinkelten Abschnitt des Klappenteils (4) gebildet sind.

8. Fronthaubenscharnier nach einem der vorhergehenden Ansprüche, **dadurch gekennzeichnet, dass** der Betätigungskörper (9) mit einem Kolbenelement (10) eines pyrotechnischen Aktuators in Eingriff bringbar ist.

## Claims

1. Bonnet hinge (1) for the articulated arrangement of a bonnet on a vehicle, comprising
- a hinge lower part (2) which is able to be connected to a vehicle body component,
- a hinge upper part (3) which is able to be connected to the bonnet, comprising
- a flap part (4) connected in an articulated manner to the hinge lower part (2) and
- an upper part (5) which is able to be arranged on the bonnet, which is connected in an articulated manner to the flap part (4) and which is able to be adjusted relative thereto between a normal position and a crash position and
- a locking device comprising a locking pawl (11) which is able to be pivoted between an unlocked position and a locked position, which is arranged in an articulated manner on one of the flap part (4) and the upper part (5) and which in the locked position is in engagement with a retaining element (13) on the other of the flap part (4) and the upper part (5),
**characterised in that**
the locking pawl (11) is pivotably connected to one of the flap part (4) and the upper part (5) about a bearing axis (17) extending substantially perpendicular to the pivot axis of the upper part (5) with the flap part (4).

2. Bonnet hinge according to Claim 1, **characterised in that** the locking pawl (11) is pivotably arranged on the flap part (4), in particular a retaining tab (6) of the flap part (4).

3. Bonnet hinge according to Claim 1 or 2, **characterised in that** the locking pawl (11) is pretensioned in the direction of the locked position.

4. Bonnet hinge according to one of the preceding claims, **characterised in that** the locking pawl (11) on one side of its pivot axis which is preferably formed by a bearing pin (14) has a first limb with a recess (15) in engagement in the locked position with a retaining element (13), preferably a retaining pin, extending substantially parallel to the pivot axis of the locking pawl (11) and on the other side of its pivot axis has a second limb with an actuating body (9) which is able to be operatively connected to an actuator.

5. Bonnet hinge according to one of the preceding claims, **characterised in that** the locking pawl (11) is pretensioned in the direction of the locked position by a spring element, in particular a leaf spring (7), acting on the second limb.

6. Bonnet hinge according to one of the preceding claims, **characterised in that** a stop element (8) is formed on the flap part (4), said stop element being able to be brought into engagement with the actuating body (9) and limiting the adjusting movement of the locking pawl (11) from the locked position into the unlocked position.

7. Bonnet hinge according to one of the preceding claims, **characterised in that** the actuating body (9) is formed by an angled portion of the locking pawl (11) and/or the stop element (8) is formed by an angled portion of the flap part (4).

8. Bonnet hinge according to one of the preceding claims, **characterised in that** the actuating body (9) is able to be brought into engagement with a piston element (10) of a pyrotechnical actuator.

## Revendications

1. Charnière de capot (1) pour l'agencement articulé d'un capot sur un véhicule, avec
- une partie inférieure de charnière (2) apte à être reliée à une pièce de carrosserie ;
- une partie supérieure de charnière (3) apte à être reliée au capot, avec
- une partie de volet (4) reliée de façon articulée à la partie inférieure de charnière (2), et
- une partie supérieure (5) apte à être montée sur le capot, reliée de façon articulée à la partie de volet (4) et réglable par rapport à celle-ci entre une position normale et une position de collision, et
- un dispositif de verrouillage avec un cliquet d'arrêt (11) apte à pivoter entre une position de déverrouillage et une position de verrouillage, agencé de façon articulée sur l'une parmi la partie de volet (4) et la partie supérieure (5) et engagé dans la position de verrouillage avec un élément de maintien (13) dans l'autre parmi la partie de volet (4) et la partie supérieure (5),
**caractérisée en ce que**
le cliquet d'arrêt (11) est relié à l'une parmi la partie de volet (4) et la partie supérieure (5) de façon pivotante autour d'un axe de palier (17) s'étendant essentiellement perpendiculairement à l'axe de pivotement de la partie supérieure (5) avec la partie de volet (4).

2. Charnière de capot selon la revendication 1, **caractérisée en ce que** le cliquet d'arrêt (11) est relié de façon pivotante à la partie de volet (4), en particulier à une patte de retenue (6) de la partie de volet (4).

3. Charnière de capot selon la revendication 1 ou 2, **caractérisée en ce que** le cliquet d'arrêt (11) est précontraint vers la position de verrouillage.

4. Charnière de capot selon l'une des revendications précédentes, **caractérisée en ce que** le cliquet d'arrêt (11) comporte une première branche d'un côté de son axe de pivotement formé de préférence par un axe de palier (14), avec un évidement (15) engageant un élément de maintien (13) dans la position de verrouillage, de préférence un boulon de maintien s'étendant quasiment parallèlement à l'axe de pivotement du cliquet d'arrêt (11), ainsi qu'une deuxième branche de l'autre côté de son axe de pivotement, avec un corps d'actionnement (9) susceptible d'être amené en liaison active avec un actionneur.

5. Charnière de capot selon l'une des revendications précédentes, **caractérisée en ce que** le cliquet d'arrêt (11) est précontraint vers la position de verrouillage par un élément à ressort agissant sur la deuxième branche, en particulier un ressort à lame (7).

6. Charnière de capot selon l'une des revendications précédentes, **caractérisée en ce qu'**un élément de butée (8) susceptible d'engager le corps d'actionnement (9) et limitant le mouvement de déplacement du cliquet d'arrêt (11) de la position de verrouillage vers la position de déverrouillage est formé sur la partie de volet (4).

7. Charnière de capot selon l'une des revendications précédentes, **caractérisée en ce que** le corps d'actionnement (9) est formé par une section coudée du cliquet d'arrêt (11) et/ou l'élément de butée (8) est formé par une section coudée de la partie de volet (4).

8. Charnière de capot selon l'une des revendications précédentes, **caractérisée en ce que** le corps d'actionnement (9) peut engager un élément de piston (10) d'un actionneur pyrotechnique.
